# EUROPÄISCHE PATENTSCHRIFT

(11) **EP 2 215 938 B1**
(45) Veröffentlichungstag und Bekanntmachung des Hinweises auf die Patenterteilung: **10.04.2013**
(21) Anmeldenummer: 09001628.8
(22) Anmeldetag: 05.02.2009
(51) Int. Cl.: A47J 27/08, A47J 27/09, F16K 17/06

(54) **Arbeitsventil**
Work valve
Soupape de travail

(43) Veröffentlichungstag der Anmeldung: 11.08.2010
(73) Patentinhaber: Silit-Werke GmbH & Co. KG, 88499 Riedlingen (DE)
(72) Erfinder: Grözinger, Roland, 88471 Laupheim (DE); Wontke, Karl-Heinz, 88422 Bad Buchbach (DE); Fingerle, Hans, 88499 Riedlingen (DE)
(74) Vertreter: Grünecker, Kinkeldey, Stockmair & Schwanhäusser

(56) Entgegenhaltungen:
- EP-A- 1 582 122
- CH-A- 127 239
- CH-A5- 608 953
- DE-A1- 2 834 397
- DE-A1- 2 854 840
- US-A- 5 092 229

## Beschreibung

Die Erfindung betrifft ein Arbeitsventil für einen Schnellkochtopf, einen Schnellkochtopf sowie ein Überdruckventil.

Die Druckschrift DE 28 54 840 A1 zeigt bereits ein einstellbares Druckbegrenzungsventil eines Dampdruckkochtopfes mit einem beweglichen Dichtelement, einer konisch ausgebildeten Dichtfläche als Ventilsitz sowie eine Druckfeder, die das Dichtelement mit einer verstellbaren Druckkraft beaufschlagt.

Herkömmliche Schnellkochtöpfe weisen ein Arbeitsventil sowie ein Sicherheitsventil auf. Bei den bekannten Schnellkochtöpfen können für gewöhnlich mit Hilfe einer Garstufenwahleinrichtung zwei unterschiedliche Druckbereiche im Topf eingestellt werden, die einer Schonstufe I und einer Schnellstufe II entsprechen. Dabei hat das Arbeitsventil eine Druckbegrenzungsfunktion. Bei Übersteigen des Drucks einer bestimmten Garstufe öffnet sich das Arbeitsventil, so dass Dampf aus dem Topf entweichen kann. Bei den bekannten Ventilen sitzt dabei beispielsweise ein metallisches Dichtteil auf einem Kunststoff auf. Es ist auch möglich, dass ein solches Arbeitsventil noch zusätzlich ein integriertes Kugelventil aufweist, über das bei Beginn des Kochvorgangs Dampf entweichen kann. Bei einem bestimmten Innendruck im Topf schließt dieses Ventil, so dass sich ein Überdruck im Topf aufbauen kann. Gleichzeitig kann dieses Ventil auch als Vakuumschutz dienen, da bei Unterdruck im Topf sich das Kugelventil öffnet und Luft nach innen strömen kann. Das zusätzlich vorgesehene Sicheheitsventil ist beispielsweise ein nicht selbst reversierendes Überdruckventil und dient ebenfalls zur Überdrucksicherung, der integrierten automatischen Entlüftung und der integrierten Vakuumverhinderung.

Hinsichtlich des Ansprechverhaltens der Arbeitsventile gibt es strenge internationale Normen. Der Ansprechdruck in der Garstufe I beträgt beispielsweise 40 kPa (0,4 bar) und in der Garstufe II beispielsweise 80 kPa (0,8 bar). Entsprechend einiger nationaler Vorschriften ist hier eine maximale Toleranz von ± 20 kPa (± 0,2 bar) zulässig. Das Ansprech- und Stabilisierungsverhalten bekannter Ventile kann die vorgegebenen engen Toleranzen nicht immer einhalten, sodass ein großer Differenzdruck vom Ansprech- bis zum Stabilisierungsdruck nötig ist.

Bei bekannten Arbeitsventilen, bei denen eine Dichtfläche aus Kunststoff oder Gummi gefertigt ist, wird die Genauigkeit weiter beeinträchtigt, da der Gummi bzw. Kunststoff mit der Zeit altert, so dass auch dadurch eine ausreichende Ansprechgenauigkeit nicht immer gewährleistet werden kann. Aufgrund der großen Dichtflächen ergibt sich darüber hinaus eine große Schließkraft, so dass der Verstellmechanismus für die unterschiedlichen Garstufen am Topf schwer zu betätigen ist.

Hiervon ausgehend liegt der vorliegenden Erfindung die Aufgabe zugrunde, ein Arbeitsventil, einen Schnellkopftopf mit einem solchen Arbeitsventil sowie ein Überdruckventil bereitzustellen, die verbesserte Ansprech- und Stabilisierungswerte aufweisen.

Erfindungsgemäß wird diese Aufgabe durch die Ansprüche 1, 10 und 13 gelöst.

Dadurch, dass ein Kugeldichtelement in Kombination mit einer konisch ausgebildeten Fläche als Ventilsitz zum Einsatz kommt, kann das Ansprechverhalten des Ventils wesentlich verbessert werden. Es können Toleranzen von < ± 20 kPa (< ± 0,2 bar) sicher eingehalten werden. Unter Kugeldichtelement soll hier ein Dichtelement verstanden werden, das zumindest ein Kugelsegment umfasst, das zum Abdichten auf der konisch ausgebildeten Fläche aufsitzt.

Ein ganz besonders gutes Ansprechverhalten ergibt sich, da die konische Fläche unter einem Winkel α von 30° bis 40°, bevorzugterweise 32° bis 37°, insbesondere 35°, konisch auseinanderläuft. Hier können Toleranzen von bis zu ± 5 kPa (± 0,05 bar) für den Ansprechdruck erreicht werden.

Somit ergibt sich eine kleine Dichtfläche zwischen Kugeldichtelement und Ventilsitz, was sich positiv auf das Ansprechverhalten auswirkt. Durch den oben genannten Aufbau öffnet sich das Ventil nicht nur schneller, wenn der Ansprechdruck erreicht ist, sondern schließt auch schneller wieder nach Reduzieren der Temperatur. Der erfindungsgemäße Aufbau bringt weiter den Vorteil mit sich, dass es durch den austretenden Dampf zu einem Selbstreinigungseffekt kommt, so dass das Arbeitsventil nicht verschmutzt oder verklebt. Auf den geraden konischen Dichtflächen setzt sich darüber hinaus weniger Schmutz fest als bei den bekannten Ventilen, die im Dichtbereich Kanten und Ecken aufweisen, in denen sich Schmutz festsetzen kann, was jedoch aus lebensmitteltechnischer Sicht nicht akzeptabel ist.

Vorteilhafterweise ist die Druckfeder, die die verstellbare Druckkraft auf das Kugeldichtelement ausübt, eine Drehstabfeder. Somit kann auf einfache Art und Weise der Druck von einem Betätigungselement am Griff auf das Kugeldichtelement übertragen werden.

Da aufgrund des Aufbaus des Arbeitsventils die ringförmige Dichtfläche klein ist, kann im Vergleich zum Stand der Technik die Schließkraft deutlich reduziert werden. Dies bringt einerseits den Vorteil mit sich, dass das Betätigungselement einfacher betätigt werden kann und darüber hinaus den Vorteil, dass eine weichere Drehstabfeder verwendet werden kann. So kann die Druckkraft z.B. in einem Bereich von 0 bis maximal 5 N ( bis Garstufe II) liegen. Die weicheren Federn können dabei vorteilhafterweise einen reduzierten Durchmesser von z.B. 1 -1,4 mm aufweisen.

Besonders vorteilhaft wirkt es sich auf das Ansprechverhalten aus, wenn das Kugeldichtelement und die konische Fläche aus Metall, insbesondere Edelstahl, gefertigt sind.

Gemäß einem bevorzugten Ausführungsbeispiel der Erfindung weist das Arbeitsventil ein Ventilgehäuse, sowie einen Ventileinsatz auf, der die konische Fläche umfasst. Der Vorteil eines solchen Ventileinsatzes ist, dass unterschiedliche Materialien für das Ventilgehäuse und den Ventileinsatz verwendet werden können. Der Ventileinsatz kann dann einfach in das Ventilgehäuse eingeschoben und darin befestigt, z.B. festgeklipst bzw. geklemmt werden.

Das Ventilgehäuse kann dann beispielsweise aus einem flexiblen Kunststoff, insbesondere aus Silikon, gebildet sein. Dies bringt den Vorteil mit sich, dass das Ventilgehäuse flexibel ist und somit beispielsweise auf einfache Art und Weise vom Inneren des Topfdeckels aus durch eine Öffnung im Topfdeckel eingedrückt werden kann und die Öffnung selbst abdichtet. Selbst wenn beispielsweise das flexible Material des Ventilgehäuses altert, kann der Ventileinsatz, der beispielsweise aus Metall gefertigt ist, seine ursprünglichen Dichteigenschaften beibehalten. Ganz besonders vorteilhaft ist es, wenn Silikon als Material für das Ventilgehäuse verwendet wird, da Silikon lebensmittelecht ist und keinerlei Weichmacher etc. aufweist, die lebensmittelchemisch bedenklich wären.

Besonders vorteilhaft ist es auch, wenn das flexible Ventilgehäuse aus einem durchsichtigen Material, insbesondere durchsichtigem Silikon gebildet ist, da aus einem derartigen Material keine lebensmittelchemisch bedenklichen Pigmente entweichen können. Das durchscheinende Material ist auch deshalb besonders geeignet, weil der Anwender sofort erkennen kann, wenn das Ventil im Inneren stark verschmutzt ist.

Als besonders geeignete Ausführungsform hat sich erwiesen, wenn das Kugeldichtelement als Ventilnadel ausgebildet ist, mit einem oberen Bereich, der als Dichtfläche zumindest ein Kugelsegment umfasst und mit einem sich daran anschließenden stabförmigen Fortsatz.

Dieser Fortsatz kann sich dann durch eine Durchgangsöffnung im Ventilgehäuse erstrecken und somit die Lage der kugelförmigen Fläche stabilisieren. Darüber hinaus ermöglicht die Ausbildung des Kugeldichtelements als Ventilnadel eine einfachere Handhabung dieses Elements im Vergleich zu einer Kugel. Durch das Ausrichten des Kugeldichtelements kann sichergestellt werden, dass eine obere Fläche, auf die beispielsweise die Druckfeder drückt, stets korrekt, senkrecht zur Längsachse des Ventils, ausgerichtet ist, so dass es zu einer gleichmäßigen Druckverteilung kommt, was wiederum das Ansprechverhalten begünstigt.

Durch das Ventilgehäuse erstreckt sich eine Durchgangsöffnung, wobei zumindest im oberen Bereich der Ventileinsatz aufgenommen ist. Das Ventilgehäuse weist vorteilhafterweise mindestens eine sich im Wesentlichen radial nach außen erstreckende Öffnung auf, die in Verbindung mit der Durchgangsöffnung steht. Durch diese Öffnung ist sichergestellt, dass, falls die Öffnung im unteren Bereich des Arbeitsventils durch Lebensmittel verschlossen wird, Dampf über diese Öffnungen nach außen treten kann.

Vorteilhafterweise ist der stabförmige Fortsatz in dem Ventilgehäuse schwimmend geführt.

Ein Schnellkochtopf gemäß der vorliegenden Erfindung weist einen Deckel auf, in dem ein Arbeitsventil eingesetzt ist. Weiter weist der Schnellkochtopfdeckel ein Überdruckventil auf.

Insbesondere ist das Überdruckventil ausgebildet mit einer Kugel, einer Druckfeder, einem Ventilgehäuse und einer konisch ausgebildeten Fläche als Ventilsitz, sowie einem Dichtring, der außen um das Ventilgehäuse aufgeschoben ist, wobei das Ventilgehäuse einen oberen Kragen aufweist und das Überdruckventil derart in einer Öffnung des Deckels angeordnet ist, dass der Deckel zwischen Kragen und Dichtring liegt, wobei das Überdruckventil vertikal im Deckel bewegbar ist.

Das bedeutet, dass die Funktion des Arbeitsventils beschränkt ist auf das Einstellen der Druckstufen sowie das Abdampfen und das Überdruckventil aufgrund seines Aufbaus die Funktion des automatischen Entlüftens, der Überdrucksicherung (p> 150 kPa (1,5 bar)) und der Vakuumverhinderung übernimmt. Aufgrund des Aufbaus des Überdruckventils mit einer Kugel und einer konischen Fläche als Ventilsitz, lässt sich auch hier das Ansprechverhalten des Überdruckventils deutlich verbessern. Auch hier sind die Kugel sowie die konische Fläche des Ventilsitzes aus Metall gebildet. Der Winkel, unter dem die konische Fläche auseinander läuft, beträgt ebenfalls vorzugsweise 30° bis 40°, noch bevorzugter 33° bis 37°, insbesondere 35°.

Im Ventilgehäuse oberhalb des Dichtrings erstreckt sich radial mindestens eine Öffnung.

Die vorliegende Erfindung wird nachfolgend unter Bezugnahme der folgenden Figuren näher erläutert.
- Fig. 1: zeigt schematisch eine Seitenansicht eines Arbeitsventils gemäß der vorliegenden Erfindung.
- Fig. 2: zeigt schematisch einen Längsschnitt durch das in Fig. 1 gezeigte Arbeitsventil.
- Fig. 3: zeigt in perspektivischer Darstellung das erfindungsgemäße Arbeitsventil.
- Fig. 4: zeigt eine perspektivische Schnittdarstellung durch das erfindungsgemäße Arbeitsventil.
- Fig. 5: zeigt eine Explosionsdarstellung des erfindungsgemäßen Arbeitsventils.
- Fig. 6: zeigt schematisch eine Seitenansicht eines Überdruckventils gemäß der vorliegenden Erfindung.
- Fig. 7: zeigt einen Längsschnitt durch das in Fig. 6 gezeigte Überdruckventil.
- Fig. 8: zeigt das in Fig. 6 und 7 gezeigte Überdruckventil in perspektivischer Darstellung.
- Fig. 9: zeigt einen Schnitt des erfindungsgemäßen Überdruckventils in perspektivischer Darstellung.
- Fig. 10: zeigt eine Explosionsdarstellung des erfindungsgemäßen Überdruckventils.
- Fig. 11: zeigt schematisch einen Schnellkochtopf gemäß der vorliegenden Erfindung.
- Fig. 12: zeigt einen Schnitt durch den Deckel des in Fig. 11 gezeigten Schnellkochtopfs.
- Fig. 13: zeigt in schematischer Darstellung eine Aufsicht auf die Unterseite des Deckels des Schnellkochtopfs gemäß der vorliegenden Erfindung.
- Fig. 14: zeigt in schematischer Darstellung einen Längsschnitt des als Ventilnadel ausgebildeten Kugeldichtelements.

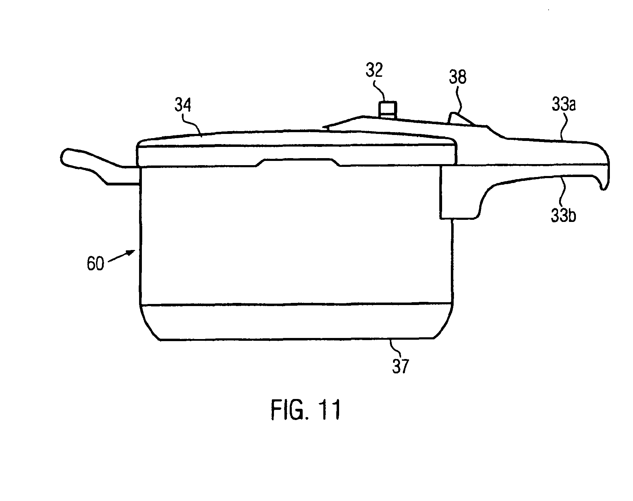

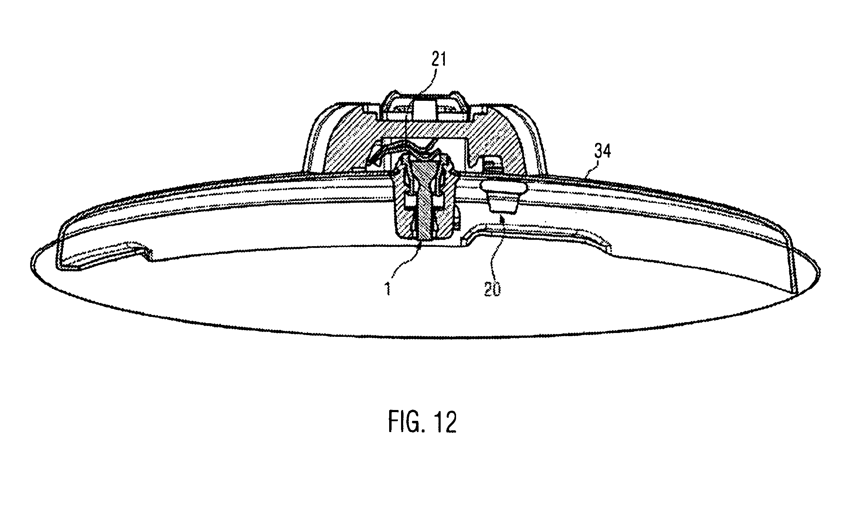

Fig. 11 zeigt einen Schnellkochtopf in perspektivischer Darstellung, der einen Topf 37, einen Deckel 34 sowie einen Griff, der sich aus einem oberen Griff 33a und unteren Griff 33b zusammensetzt, aufweist. Der Griff weist hier ein Betätigungselement 38 in Form eines Schiebers auf, über den mit Hilfe einer Drehstabfeder (siehe Fig. 12) ein Ansprechdruck entsprechend einer Garstufe, beispielsweise Garstufe I (entsprechend einem vorbestimmten Druckwert in einem Bereich von 20 - 30 kPa (0,2 - 0,3 bar)) oder Garstufe II (entsprechend einem vorbestimmten Druckwert in einem Bereich von 80 - 90 kPa (0,8 - 0,9 bar)) des Arbeitsventils 1 eingestellt werden kann. Weiter kann der Topf über das Betätigungselement auch entlüftet und geöffnet werden.

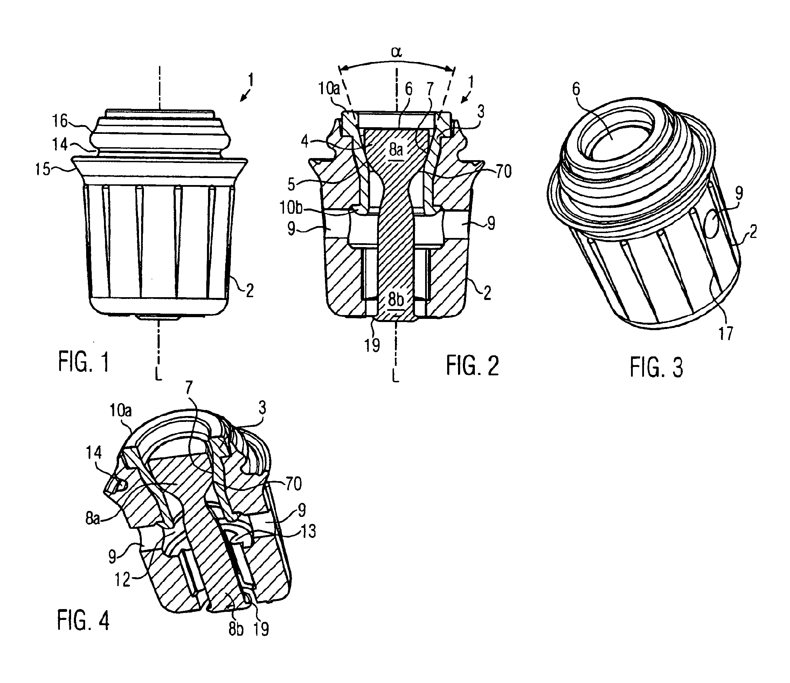

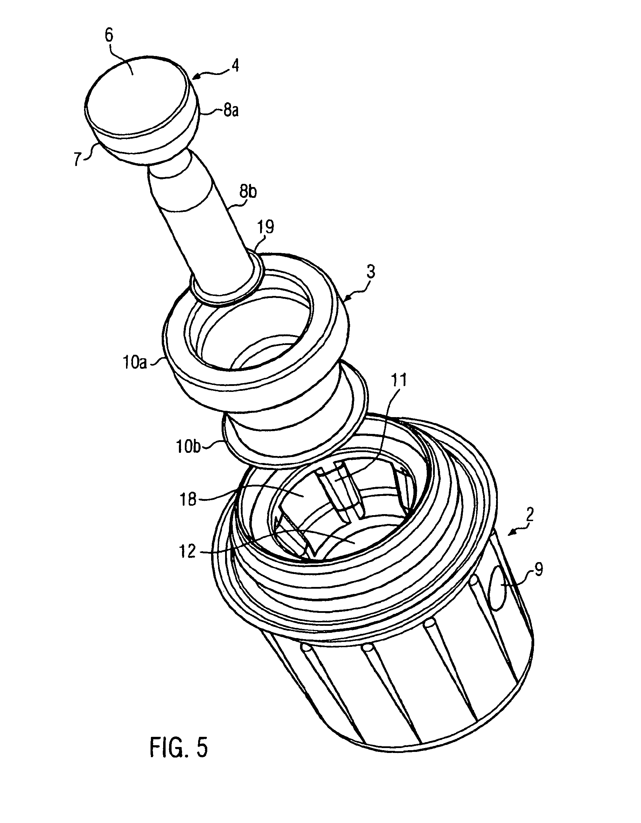

Fig. 1 bis 5 zeigen eine mögliche Ausführungsform des Arbeitsventils 1 gemäß der vorliegenden Erfindung. Das Arbeitsventil 1 weist, wie aus den Abbildungen hervorgeht, ein Ventilgehäuse 2 auf, das vorzugsweise aus einem transparenten Kunststoff, insbesondere aus flexiblem Silikon, gebildet ist. Das Silikon weist beispielsweise eine Shorehärte von 60° ± 5° auf. Das Ventilgehäuse 2 ist vorteilhafterweise aus transparentem Material gebildet, was den Vorteil mit sich bringt, dass der Benutzer Verschmutzungen im Inneren des Arbeitsventils 1 sofort erkennen kann. Silikon weist darüber hinaus keine lebensmittelchemisch bedenklichen Stoffe und bei durchscheinendem Material auch keine Pigmente auf. Außerdem ist Silikon ausgezeichnet temperaturstabil. Das Ventilgehäuse 2 weist eine Durchgangsöffnung 12 auf, die sich von oben nach unten entlang der Mittelachse L erstreckt. Im äußeren Bereich weist das Ventilgehäuse eine Ringnut 14 auf, sowie eine darunterliegende vorspringende umlaufende Lippe und einen über der Aussparung 14 angeordneten vorspringenden Ring 16. Die Nut 14 sowie die Lippe 15 und der Ring 16 sind derart ausgebildet, dass der Ventilkörper von der Unterseite des Deckels 34 durch eine entsprechende Öffnung im Deckel eingeschoben werden kann, wobei dann der Deckel in der Nut 14 zu liegen kommt und von dem Ring 16 und der Lippe 15 geklemmt und abgedichtet wird, wie insbesondere aus Fig. 12 hervorgeht. Somit kann das Arbeitsventil 1 auf einfache Art und Weise eingesetzt und zu Reinigungszwecken entnommen werden.

Wie insbesondere aus Fig. 2, 4 und 5 hervorgeht, ist im Ventilgehäuse 2 ein Ventileinsatz 3 eingesetzt, der hohlförmig ausgebildet ist und an seiner Innenseite als Ventilsitz 5 eine konische Fläche aufweist. Der Ventileinsatz 3 weist am oberen und unteren Ende ringförmige Vorsprünge 10a sowie 10b auf, mit denen er im flexiblen Ventilgehäuse 2 festgeklemmt werden können. Vorteilhafterweise ist der Ventileinsatz 3 aus Metall, insbesondere poliertem Edelstahl, ausgebildet. Der Ventileinsatz 3 erstreckt sich zumindest durch den oberen Bereich der Durchgangsöffnung 12. Im oberen Bereich des Ventilgehäuses 2 befinden sich im Inneren der Durchgangsöffnung 12 Rippen 11, die den Einsatz des Ventileinsatzes sowie die Montage des kompletten Arbeitsventils 1 in den Deckel 34 erleichtern.

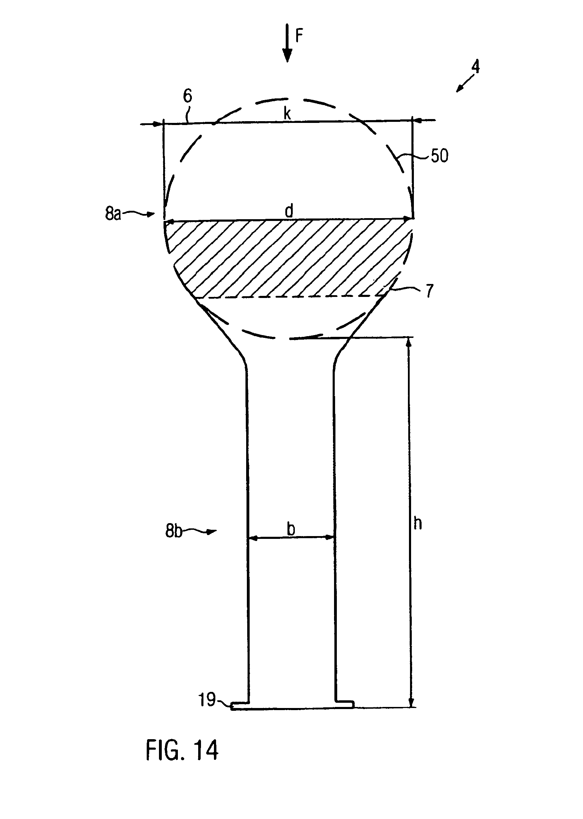

Innerhalb des Ventileinsatzes 3 ist, wie in Fig. 2, 4 und 5 zu erkennen ist, ein in Pfeilrichtung bewegliches Kugeldichtelement 4 vorgesehen. Das Kugeldichtelement 4 kann als Kugel ausgebildet sein, weist hier jedoch zumindest ein Kugelsegment auf, das zum Abdichten auf der konischen Fläche 5 zu liegen kommt, wie insbesondere auch aus Fig. 14 hervorgeht. Fig. 14 zeigt im oberen Bereich den Schnitt durch eine virtuelle Kugel 50, wobei das schraffierte Segment als Dichtfläche 7 dienen kann. Bei dieser Ausführungsform ist das Kugeldichtelement 4 als Ventilnadel ausgebildet und weist neben dem oberen Bereich 8a noch einen stabförmigen Fortsatz 8b auf. Am oberen Ende des Kugeldichtelements 4 ist eine kreisförmige Fläche 6 vorgesehen, deren Abmessung k im Wesentlichen dem Durchmesser d der virtuellen Kugel ± 10 % entspricht. Die Höhe h des unteren Bereichs 8b beträgt mindestens 1,5d. Der Durchmesser b des unteren Bereichs 8b ist kleiner als der Durchmesser d der virtuellen Kugel 50. Am unteren Ende weist der untere Bereich 8b einen umlaufenden vorspringenden Rand 19 auf.

Das Kugeldichtelement 4 kann von oben in das Ventilgehäuse 2 eingeschoben werden. Unterhalb des Ventileinsatzes 3 zeigt die Durchgangsöffnung 12, mehrere um den inneren Umfang der Durchgangsöffnung 12 verteilte, sich in einer Richtung entlang der Achse L erstreckende Rippen 13 auf, der Abstand von gegenüberliegenden Rippen 13 ist jedoch größer als die Abmessung b des unteren Bereichs 8b des Kugeldichtelementes 4, so dass das Kugeldichtelement 4 hier schwimmend geführt wird. Die Längsrippen 13 erstrecken sich nicht ganz bis zum unteren Ende der Durchgangsöffnung 12. Durch den vorspringenden Rand 19 des Kugeldichtelementes 4, dessen Durchmesser größer ist als der Abstand zwischen den flexiblen gegenüberliegenden Längsrippen 13 wird das Kugeldichtelement 4 in dem Ventilgehäuse 2 gehalten und kann nicht von selbst nach oben herausrutschen. Somit kann das Kugeldichtelement 4 korrekt in dem Ventilgehäuse ausgerichtet werden, so dass die Oberseite 6 sich im Wesentlichen senkrecht zur Längsachse L ausrichten kann, und ein gleichmäßiger Druck von der Drehstabfeder auf die Fläche 6 ausgeübt werden kann. Die Fläche 6 ragt im geschlossenen Zustand nicht über den Vorsprung 10a des Ventileinsatzes hinaus. Vorteilhafterweise ist das Kugeldichtelement 4 ebenfalls aus Metall, insbesondere aus Edelstahl gebildet.

Unterhalb des Ventileinsatzes 3 weist das Ventilgehäuse 2 mindestens eine sich im Wesentlichen radial nach außen erstreckende Öffnung 9 auf, die in Verbindung mit der Durchgangsöffnung 12 steht. Somit ist sichergestellt, dass selbst wenn die untere Öffnung des Ventilgehäuses durch Lebensmittel abgedeckt wird, über die Öffnungen 9 Dampf nach außen treten kann.

Das Kugeldichtelement ist aus Metall, insbesondere poliertem Edelstahl, gebildet.

Durch den Aufbau des Arbeitsventils 1 und insbesondere durch das Kugeldichtelement 4 sowie die konische Fläche als Ventilsitz 5 kann das Ansprechverhalten des Ventils deutlich verbessert werden. Somit können Toleranzen von ± 0,2 bar für den Ansprechdruck bis zum vollständigen Öffnen des Ventils leicht realisiert werden. Ein besonders gutes Ansprechverhalten ergibt sich dann, wenn der Winkel α, unter dem die konische Fläche auseinanderläuft, in einen Bereich von 30 bis 40, bevorzugterweise 33 bis 37 oder 35° ± 0,5° liegt. Bei einer solchen Anordnung kann sogar eine Toleranz von ± 5 kPa (± 0,05 bar) realisiert werden.

Der Durchmesser d des Kugeldichtelements liegt vorzugsweise in einem Bereich von 6 bis 9 mm. Der untere Durchmesser der konischen Fläche des Ventilsitzes ist so klein gewählt, dass die Kugel oberhalb der Unterkante 70 auf der Fläche aufsitzt. Durch die kleine ringförmige Dichtfläche 7 ist eine geringere Schließkraft für die Druckfeder 21 nötig. Die Drehstabfeder 21, die auf die Fläche 6 drückt (siehe Fig. 12), benötigt beispielsweise statt 9,5 N nur noch 4,15 N bei einem Innendruck von 90 kPa (0,9 bar) Stufe II. Bei Stufe I beträgt die Schließkraft z.B. 1,4 N bei einem Überdruck von 30 kPa (0,3 bar). Die Schließkraft liegt also in einem Bereich von bis zu ca. 5 N. Bei einem Innendruck von 150 kPa wäre die Schließkraft 6,9 N. Aus diesem Grund kann die Drehstabfeder deutlich weicher ausgebildet werden und weist beispielsweise einen kleineren Durchmesser in einem Bereich von vorzugsweise 1 -1,4 mm auf. Die Länge der Drehstabfeder liegt zwischen 50 und 90 mm (vorzugsweise 75 mm) und als Material ist Federstahl, insbesondere Federstahl Nirosta (1.4310), mit einem Schubmodul G für Federstahl, insbesondere von z.B. 73000 N/mm², geeignet. Derartige weiche Federn können z.B. eine Federrate , d.h. ein Verhältnis von Torsionsmoment /Verdrehwinkel < 10 N mm / Grad Verdrehwinkel, insbesondere 1 - 7 N mm / Grad Verdrehwinkel aufweisen.

Da die Schließkraft geringer ist, ist auch die Betätigungseinrichtung, d.h. der Schieber 38, am Topfgriff leichter zu betätigen. Aufgrund der Geometrie der konischen Fläche und des Kugeldichtelements ergibt sich eine Reinigungswirkung durch den ausströmenden Dampf, so dass sich an den glatten Flächen keine Verunreinigungen festsetzen, was wiederum zu einer stabilen Funktionsweise des Ventils führt.

Wie bereits vorab erwähnt, ist das Kugeldichtelement 4 mit Federkraft beaufschlagt, wobei sich das Arbeitsventil dann öffnet, wenn im Topf ein bestimmter Ansprechdruck erreicht wird.

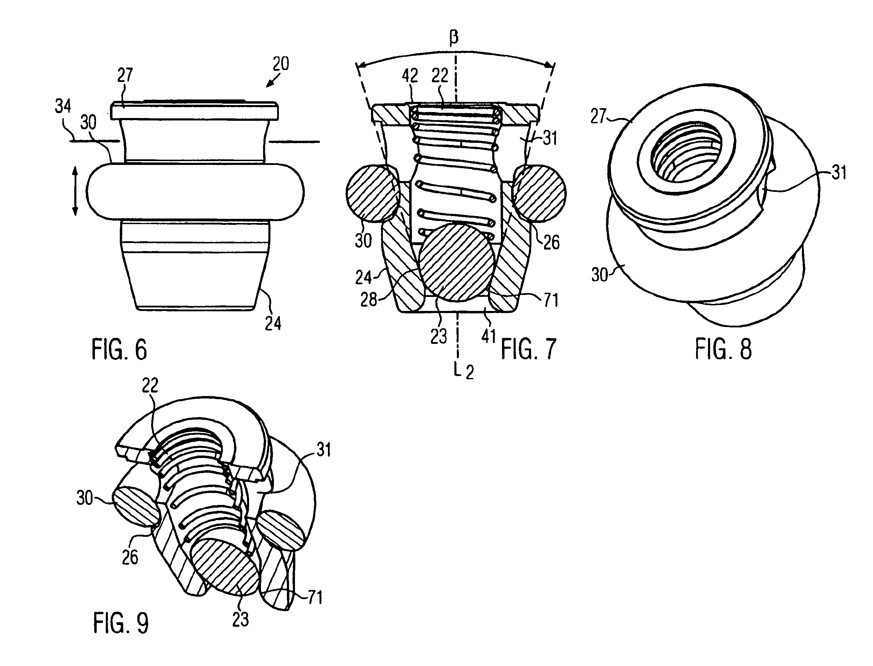

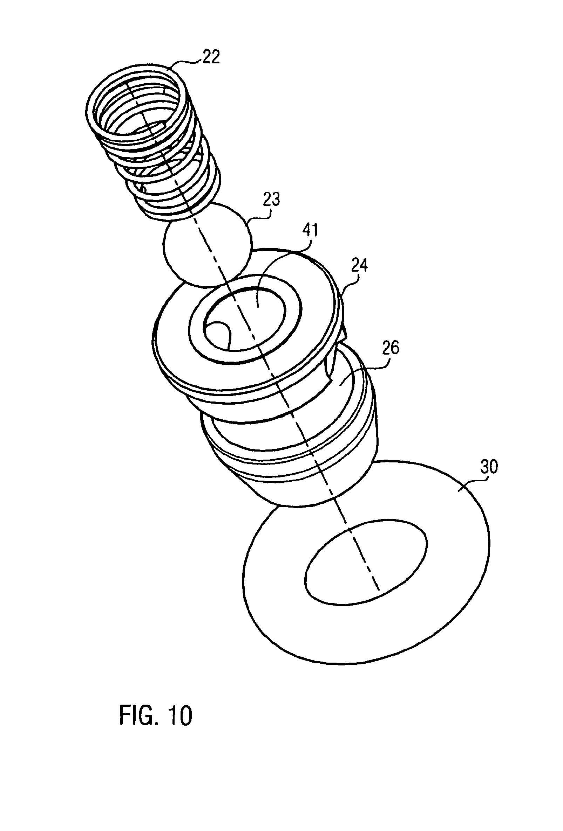

Wie aus den Fig. 12, 13 sowie den Fig. 6 bis 10 hervorgeht, weist der Schnellkochtopf neben dem Arbeitsventil auch noch das Überdruckventil 20 auf. Das selbst reversierende Überdruckventil hat hier die Funktion der Überdrucksicherung, der Entlüftungsautomatik sowie der Vakuumverhinderung. Wie aus Fig. 6 hervorgeht, weist auch dieses Ventil 20 ein Ventilgehäuse 24 auf, das eine Durchgangsöffnung 41 hat. Das Ventilgehäuse 24 ist vorzugsweise aus Metall, insbesondere poliertem Edelstahl, gebildet. Das Überdruckventil weist eine über die Feder 22 druckbeaufschlagte Kugel 23 auf. Die Feder 22 ist vorzugsweise als konische Feder ausgebildet, wärmebehandelt und weist einen nach oben zunehmenden Durchmesser auf. Die Durchgangsöffnung 41 des Ventilgehäuses 24 weist eine konische Fläche 28 als Ventilsitz auf. Zum Abdichten liegt dabei die Kugel auf der konischen Fläche auf, wobei der Durchmesser der Kugel (z.B. 4 bis 6 mm) und der untere Durchmesser der konischen Fläche so abgestimmt sind, dass die Kugel oberhalb der Unterkante 71 auf der Fläche 28 aufsitzt.

Das Ende bzw. die Unterkante des konischen Bereichs ist abgerundet. Die Kugel ist ebenfalls aus Metall, insbesondere poliertem Edelstahl, gebildet.

Das Ventilgehäuse 24 weist am oberen Ende einen umlaufenden, vorspringenden Rand 27 auf sowie einen auf eine Ringnut aufgeschobenen Dichtring 30, beispielsweise aus Silikon. Das Überdruckventil wird in eine Öffnung im Deckel (Fig. 12) von der Oberseite des Deckels eingeschoben und sitzt mit dem Rand 27 auf dem Deckel auf. Dann wird von der Unterseite der Dichtring 30 in die Nut aufgeschoben. Der Deckel 34 liegt dann also zwischen der Dichtung 30 und dem vorspringenden Rand 27. Das Überdruckventil ist dann also, wie in Fig. 6 durch den Pfeil dargestellt, in der Deckelbohrung im Deckel 34 auf und ab bewegbar.

Ebenso wie beim Arbeitsventil beträgt der Winkel β der konischen Fläche 28 30° bis 40°, insbesondere 33° bis 37°. Die besten Ergebnisse bezüglich des Ansprechverhaltens haben sich bei einem Winkel von 35° ± 0,5° ergeben. Im oberen Bereich, oberhalb des Dichtrings 30, ist zumindest eine sich radial nach außen erstreckende Öffnung 31 vorgesehen. Die Queröffnungen verhindern ein falsches Einbauen, sowie Be- und Entlüften.

Bei der Herstellung und Montage des Überdruckventils wird zunächst die Kugel 23 und die Feder 22 über die obere Öffnung des Ventilgehäuses 24 in das Ventilgehäuse 24 eingebracht. Hier steht ein Rand 42 an der Oberseite des Ventilgehäuses 24 nach oben. Der Rand 42 wird dann nach der Kugel- und Federmontage nach innen umgelegt, um die Feder in vorgespanntem Zustand zu halten. Die vorab bestimmte Federkraft, die auf die Kugel 23 wirkt, ist konstant.

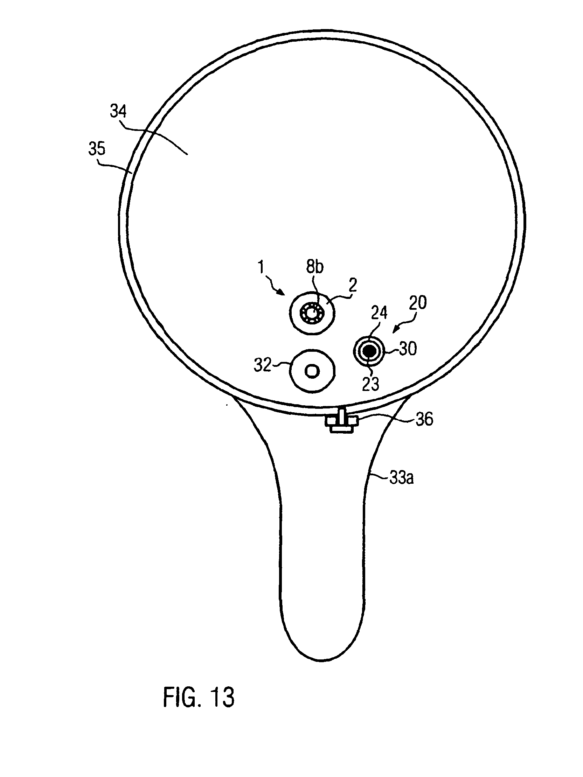

Wie insbesondere aus den Fig. 12 und 13 hervorgeht, sind das Arbeitsventil 1 und das Überdruckventil 20 in einer Aussparung unterhalb des Griffes 33a, der sich über die Deckeloberseite erstreckt, angeordnet, wobei Öffnungen nach außen vorgesehen sind, um Dampf abzuleiten.

Der Schnellkochtopf 12 gemäß der vorliegenden Erfindung funktioniert wie folgt.

Zunächst wird das zu erwärmende Lebensmittel mit Flüssigkeit (Wasser) in den Topf 37 eingebracht und der Deckel wird über, z.B. einen Bajonettverschluss und eine Verriegelung 36 in bekannter Weise geschlossen. Über den Schieber bzw. das Betätigungselement 38 wird eine bestimmte Garstufe eingestellt, so dass die Druckfeder 21 entsprechend dieser Garstufe eine entsprechende Federkraft auf die Fläche 6 des Kugeldichtelementes 4 ausübt. Bei Garstufe I entspricht der Druck im Topf beispielsweise einem Druckwert in einem Bereich von 20 - 30 kPa , bei Garstufe II einem Druckwert in einem Bereich von 80 - 90 kPa. Zu diesem Zeitpunkt ist das, durch die Feder 21 mit Federkraft beaufschlagte Kugeldichtelement 4, in seiner unteren geschlossenen Position derart, dass das Arbeitsventil 1 geschlossen ist.

Das Überdruckventil 20 befindet sich aufgrund des normalen Drucks im Topf in einer Position, in der der Rand 27 auf dem Deckel 34 aufliegt, wie in Fig. 6 dargestellt ist. Die Kugel 23, die von der Feder 22 mit Druck beaufschlagt wird und auf der konischen Fläche 28 aufliegt, hält das Ventil 20 geschlossen.

Durch Erwärmen des Topfes verdampft Wasser und der Druck im Topf steigt an. Der Dampf kann über die Öffnungen 31 im Überdruckventil, sowie im Ringspalt zwischen der Deckelbohrung und dem Überdruckventil nach außen entweichen .

Steigt der Druck im Topf auf einen bestimmten Druck, z.B. 4 kPa (0,04 bar) an, so bewegt sich das Überdruckventil, wie durch den Pfeil in Fig. 6 dargestellt ist, nach oben, so dass die Dichtung 30 am unteren Deckelrand anliegt und hier die Öffnung bzw. Deckelbohrung abdichtet.

Nun kann bei weiterer Erwärmung der Druck im Topf ansteigen.

Bei Erreichen des gewählten Ansprechdruckes (Stufe I oder II) in dem Topf bewegt sich das Kugeldichtelement 4, wie durch den Pfeil in Fig. 2 dargestellt ist, nach oben und das Ventil 1 öffnet sich. Aufgrund der erfindungsgemäßen Konstruktion hat, wie zuvor beschrieben, das Arbeitsventil ein sehr gutes Ansprechverhalten mit einer Toleranz von < ± 20 kPa (0,2 bar).

Die Temperatur muss nun reduziert werden, damit der Druck wieder unterhalb den Ansprechdruck des Arbeitsventils 1 fällt.

Aufgrund des Aufbaus des erfindungsgemäßen Arbeitsventils 1 kann bei Erreichen dieses Drucks sich das Ventil auch sehr schnell wieder schließen, da das Ansprechverhalten besser als im Stand der Technik ist.

Über eine Druckanzeige 32 kann der Druck im Inneren des Topfes erkannt werden. Dabei tritt in bekannter Weise ein Zylinder in Abhängigkeit des Drucks nach oben.

Würde der Druck im Topf über einen bestimmten Grenzwert steigen, z.B. 1,5 bar, würde sich das Überdruckventil 20 öffnen, wobei dann die Kugel gegen die Feder 22 nach oben gedrückt werden würde, so dass Dampf entweichen kann.

Bei Beenden des Kochvorgangs kann über das Betätigungselement 38 und über die Feder 21 der Druck von dem Kugeldichtelement 4 genommen werden, so dass der Dampf über das Arbeitsventil 1 entweichen kann, wobei bei Normaldruck der Topfdeckel geöffnet werden kann. Bei absinkendem Druck fällt auch das Überdruckventil 20 wieder nach unten, so dass der Rand 27 auf dem Deckel 34 um die Deckelbohrung herum aufliegt. So kann auch ein Unterdruck im Topf vermieden werden.

## Patentansprüche

1. Arbeitsventil für einen Schnellkochtopf (60) mit
einem beweglichen Kugeldichtelement (4),
einer konisch ausgebildeten Fläche als Ventilsitz (5), sowie
einer Druckfeder (21), die das Kugeldichtelement (4) mit einer verstellbaren Druckkraft beaufschlagt, **dadurch gekennzeichnet, dass** die Fläche des Ventilsitzes (5) unter einem Winkel α von 30 bis 40°, vorzugsweise 33° bis 37°, insbesondere 35° konisch auseinanderläuft.

2. Arbeitsventil nach Anspruch 1, **dadurch gekennzeichnet, dass** die Druckfeder (21) eine Drehstabfeder ist.

3. Arbeitsventil nach Anspruch 2, **dadurch gekennzeichnet, dass** die Druckkraft der Drehstabfeder (21) für mindestens zwei Druckstufen einstellbar ist und in einem Bereich von 0 bis 5 N einstellbar sein kann.

4. Arbeitsventil nach mindestens einem der Ansprüche 1 bis 3, **dadurch gekennzeichnet, dass** das Kugeldichtelement (4) und der Ventilsitz (5) aus Metall gefertigt sind.

5. Arbeitsventil nach mindestens einem der Ansprüche 1 bis 4, **dadurch gekennzeichnet, dass** das Arbeitsventil (1) ein Ventilgehäuse (2) aufweist, mit einem Ventileinsatz (3), der den Ventilsitz (5) umfasst.

6. Arbeitsventil nach Anspruch 5, **dadurch gekennzeichnet, dass** das Ventilgehäuse (2) aus einem flexiblen, vorzugsweise transparenten Kunststoff, insbesondere aus Silikon gebildet ist.

7. Arbeitsventil nach mindestens einem der Ansprüche 1 bis 6, **dadurch gekennzeichnet, dass** das Kugeldichtelement (4) als Ventilnadel ausgebildet ist mit einem oberen Bereich (8a), der als Dichtfläche (7) ein Kugelsegment umfasst und einem stabförmigen Fortsatz (8b).

8. Arbeitsventil nach mindestens einem der Ansprüche 1 bis 7, **dadurch gekennzeichnet, dass** das Ventilgehäuse (2) eine Durchgangsöffnung (12) aufweist, die sich durch das Ventilgehäuse (2) erstreckt und in der zumindest im oberen Bereich der Ventileinsatz (5) aufgenommen ist, wobei das Ventilgehäuse mindestens eine sich im Wesentlichen radial nach außen erstreckende Öffnung (9) aufweist, die in Verbindung mit der Durchgangsöffnung (12) steht.

9. Arbeitsventil nach mindestens einem der Ansprüche 1 bis 8, **dadurch gekennzeichnet, dass** der stabförmige Fortsatz (8b) in dem Ventilgehäuse (2) schwimmend geführt ist.

10. Schnellkochtopf, in dessen Deckel (34) ein Arbeitsventil nach mindestens einem der Ansprüche 1 bis 9 eingesetzt ist, wobei der Deckel weiter ein Überdruckventil (20) aufweist, das sich bei einem vorbestimmten Druck im Schnellkochtopf öffnet, wobei das Überdruckventil (20) folgendes aufweist: eine Kugel (23), eine Druckfeder (22), ein Ventilgehäuse (24) mit einer konisch ausgebildeten Fläche (28) als Ventilsitz, wobei das Ventilgehäuse (24) einen oberen Kragen (27) aufweist, und das Überdruckventil (20) derart in einer Öffnung des Deckels (34) angeordnet ist, dass der Deckel zwischen dem Kragen (27) und dem Dichtring (30) liegt, derart, dass das Überdruckventil (20) vertikal in dem Deckel (34) bewegbar ist, und wobei die Fläche (28) unter einem Winkel α von 30° bis 40°, bevorzugterweise 33° bis 37°, insbesondere 35° konisch auseinanderläuft.

11. Schnellkochtopf nach Anspruch 10, **dadurch gekennzeichnet, dass** die Kugel (23) und die konische Fläche (28) aus Metall gebildet sind.

12. Schnellkochtopf nach mindestens einem der Ansprüche 10 bis 11, **dadurch gekennzeichnet, dass** im Ventilgehäuse (24), oberhalb des Dichtrings (25), mindestens eine sich radial erstreckende Öffnung (31) ausgebildet ist.

13. Überdruckventil für einen Schnellkochtopf (60) mit einer Kugel (23), einer Druckfeder (21), einem Ventilgehäuse (24) mit einer konisch ausgebildeten Fläche (28) als Ventilsitz, wobei das Ventilgehäuse (24) einen oberen Kragen (27) aufweist, und das Überdruckventil (20) derart in einer Öffnung eines Deckels (34) des Schnellkochtopfs (60) angeordnet werden kann, dass der Deckel zwischen dem Kragen (27) und dem Dichtring (30) liegt, derart, dass das Überdruckventil (20) vertikal in dem Deckel (34) bewegbar ist, wobei die Fläche (28) unter einem Winkel α von 30° bis 40°, bevorzugterweise 33° bis 37°, insbesondere 35° konisch auseinanderläuft.

## Claims

1. Work valve for a pressure cooker (60) comprising a movable spherical sealing element (4),
a conically shaped surface constituting a valve seat (5), and
a compression spring (21) which applies an adjustable compression force to the spherical sealing element (4), **characterised in that** the surface of the valve seat (5) diverges conically at an angle α of 30 to 40°, preferably 33° to 37°, in particular 35°.

2. Work valve as claimed in claim 1, **characterised in that** the compression spring (21) is a torsion bar spring.

3. Work valve as claimed in claim 2, **characterised in that** the compression force of the torsion bar spring (21) is adjustable for at least two pressure stages and can be adjusted in a range of 0 to 5 N.

4. Work valve as claimed in at least one of claims 1 to 3, **characterised in that** the spherical sealing element (4) and the valve seat (5) are made from metal.

5. Work valve as claimed in at least one of claims 1 to 4, **characterised in that** the work valve (1) has a valve housing (2) with a valve insert (3) incorporating the valve seat (5).

6. Work valve as claimed in claim 5, **characterised in that** the valve housing (2) is made from a flexible, preferably transparent, plastic, in particular from silicone.

7. Work valve as claimed in at least one of claims 1 to 6, **characterised in that** the spherical sealing element (4) is provided in the form of a valve needle with a top region (8a) comprising a sphere segment constituting a sealing surface (7) and a bar-shaped extension (8b).

8. Work valve as claimed in at least one of claims 1 to 7, **characterised in that** the valve housing (2) has a passage orifice (12) extending through the valve housing (2) and in which the valve insert (5) is accommodated in at least the top region, and the valve housing has at least one orifice (9) extending essentially radially outwards, which sits in communication with the passage orifice (12).

9. Work valve as claimed in at least one of claims 1 to 8, **characterised in that** the bar-shaped extension (8b) is guided in the valve housing (2) in a floating arrangement.

10. Pressure cooker, in the lid (34) of which a work valve as claimed in at least one of claims 1 to 9 is inserted, the lid additionally having an over-pressure valve (20) which opens in the pressure cooker at a predefined pressure, and the over-pressure valve (20) comprises the following: a sphere (23), a compression spring (22), a valve housing (24) with a conically shaped surface (28) constituting a valve seat, and the valve housing (24) has a top collar (27), and the over-pressure valve (20) is disposed in an orifice of the lid (34) in such a way that the lid lies between the collar (27) and the sealing ring (30) so that the over-pressure valve (20) is able to move vertically in the lid (34), and the surface (28) diverges conically at an angle α of 30° to 40°, more preferably 33° to 37°, in particular 35°.

11. Pressure cooker as claimed in claim 10, **characterised in that** the sphere (23) and the conical surface (28) are made from metal.

12. Pressure cooker as claimed in at least on of claims 10 to 11, **characterised in that** at least one radially extending orifice (31) is disposed in the valve housing (24) above the sealing ring (25).

13. Over-pressure valve for a pressure cooker (60) with a sphere (23), a compression spring (21), a valve housing (24) with a conically shaped surface (28) constituting a valve seat , and the valve housing (24) has a top collar (27), and the over-pressure valve (20) can be disposed in an orifice of a lid (34) of the pressure cooker (60) in such a way that the lid lies between the collar (27) and the sealing ring (30) so that the over-pressure valve (20) is able to move vertically in the lid (34), and the surface (28) diverges conically at an angle α of 30° to 40°, more preferably 33° to 37°, in particular 35°.

## Revendications

1. Soupape de service pour autocuiseur (60), comprenant
un élément étanche sphérique mobile (4),
une surface conique comme siège de soupape (5), et un ressort de compression (21) qui applique une force de compression ajustable à l'élément étanche sphérique (4),
**caractérisée en ce que** la surface du siège de soupape (5) présente un profil conique avec un angle α de 30° à 40°, préférablement de 33° à 37°, et en particulier de 35°.

2. Soupape de service selon la revendication 1, **caractérisée en ce que** le ressort de compression (21) est un ressort à tige de torsion.

3. Soupape de service selon la revendication 2, **caractérisée en ce que** la force de compression du ressort à tige de torsion (21) peut être réglée à au moins deux niveaux de compression et peut être réglée dans une plage de 0 N à 5 N.

4. Soupape de service selon au moins une des revendications 1 à 3, **caractérisée en ce que** l'élément étanche sphérique (4) et le siège de soupape (5) sont réalisés en métal.

5. Soupape de service selon au moins une des revendications 1 à 4, **caractérisée en ce que** la soupape de service (1) comprend un boîtier de soupape (2) avec une garniture de soupape (3) qui comporte le siège de soupape (5).

6. Soupape de service selon la revendication 5, **caractérisée en ce que** le boîtier de soupape (2) est constitué en un matériau synthétique flexible et préférablement transparent, et en particulier en silicone.

7. Soupape de service selon au moins une des revendications 1 à 6, **caractérisée en ce que** l'élément étanche sphérique (4) est constitué comme un pointeau de soupape, avec une section supérieure (8a) comportant un segment sphérique faisant office de surface d'étanchéité (7) et un prolongement en forme de barre (8b).

8. Soupape de service selon au moins une des revendications 1 à 7, **caractérisée en ce que** le boîtier de soupape (2) comporte une ouverture de passage (12) qui s'étend à travers le boîtier de soupape (2) et dans laquelle est logée la garniture de soupape (5), au moins dans la section supérieure, dans laquelle le boîtier de soupape comporte au moins une ouverture (9) qui s'étend essentiellement radialement vers l'extérieur et est en communication avec l'ouverture de passage (12).

9. Soupape de service selon au moins une des revendications 1 à 8, **caractérisée en ce que** le prolongement en forme de barre (8b) est logé de façon flottante dans le boîtier de soupape (2).

10. Autocuiseur dans le couvercle (34) duquel est montée une soupape de service selon au moins une des revendications 1 à 9, dans lequel le couvercle comporte en outre une soupape de surpression (20) qui s'ouvre à une pression prédéterminée dans l'autocuiseur, dans lequel la soupape de surpression (20) comprend : une bille (23), un ressort de compression (22), un boîtier de soupape (24) avec une surface conique (28) comme siège de soupape, dans lequel le boîtier de soupape (24) comporte un collet supérieur (27), et la soupape de surpression (20) est agencée dans une ouverture du couvercle (34) de telle façon que le couvercle se trouve entre le collet (27) et l'anneau d'étanchéité (30), de sorte que la soupape de surpression (20) peut se déplacer verticalement dans le couvercle (34), et dans lequel la surface (28) présente un profil conique avec un angle α de 30° à 40°, préférablement de 33° à 37°, et en particulier de 35°.

11. Autocuiseur selon la revendication 10, **caractérisé en ce que** la bille (23) et la surface conique (28) sont constituées en métal.

12. Autocuiseur selon au moins une des revendications 10 et 11, **caractérisé en ce qu'**au moins une ouverture à extension radiale (31) est constituée dans le boîtier de soupape (24), au-dessus de l'anneau d'étanchéité (25).

13. Soupape de surpression pour autocuiseur (60), comprenant une bille (23), un ressort de compression (21), un boîtier de soupape (24) avec une surface conique (28) comme siège de soupape, dans laquelle le boîtier de soupape (24) comporte un collet supérieur (27), et la soupape de surpression (20) peut être agencée dans une ouverture d'un couvercle (34) de l'autocuiseur (60) de telle façon que le couvercle se trouve entre le collet (27) et la l'anneau d'étanchéité (30), de sorte que la soupape de surpression (20) peut se déplacer verticalement dans le couvercle (34), dans laquelle la surface (28) présente un profil conique avec un angle α de 30° à 40°, préférablement de 33° à 37°, et en particulier de 35°.
